# EUROPEAN PATENT APPLICATION

(11) **EP 2 700 494 A1**
(43) Date of publication of application: **26.02.2014**
(21) Application number: 13156456.9
(22) Date of filing: 22.02.2013
(51) Int. Cl.: B29C 70/52, B29D 99/00, B29C 70/22, B29B 11/16, B29D 28/00

(54) **Fibre reinforced polymer structure**

(30) Priority: 24.08.2012 GB 201215124
(71) Applicant: TB Composites Limited, Ballycummin, Limerick (IE)
(72) Inventor: Newton, John Reginald, Grange-over-Sands Cumbria LA11 7QS (GB)
(74) Representative: Browne, Robin Forsythe

(57) **Abstract**

A fibre reinforced polymer structure comprises a plurality of first and second bundles of substantially unidirectional fibres;
a first bundle overlying a second bundle in angular relation to form a node;
wherein the fibre volume fraction (FVF) of each bundle remains approximately constant as it passes through the node.

## Description

The invention relates to a composite material structures where the composite is composed of structural fibres embedded within a matrix polymer system. The invention also relates to methods and apparatus for manufacture of the structures. Use of the invention enables the construction of web type structures employing unidirectional fibres in which the webs pass through each other by the creation of a node. The invention also relates to methods of integrating the web structures into various different products and to products obtained by use of the methods.

Historically web type structures have been used to provide structural stiffness, for example in structures made of steel, cast iron, many alloys and plastics. Typical components incorporating web type structures include gear boxes, manhole covers, cabinet doors and open mesh grating. Processes such as moulding, machining from solids and casting can produce web structures effectively but in the case of steel and other materials supplied in lengths of constant cross section a method of connecting the webs is required. This incurs additional complexity, effort and cost.

Composite materials consisting of structural fibres such as glass or carbon fibres can be made efficiently by a pultrusion process. The sections made are typically of constant cross sectional shape. However it is difficult to efficiently make them into a finished product which effectively uses their structural properties. Ladders are a typical product made from pultruded glass fibre composite sections. However, they require additional effort in the form of drilling, bonding and mechanical fixing methods to complete a finished ladder.

The format of fibres typically found in composite products may fall into three main categories:
1. Random fibres either in chopped or chopped strand mat format.
2. Woven roving or stitch bonded fabrics.
3. Unidirectional fibres where all the fibres are in the same direction.

The format and quantity of fibres significantly influences the tensile strength of the product. In practice the fibre volume fraction is limited as each fibre should be coated with the matrix resin and the fibres have to be packed together. The packing density is influenced by the fibre format. Random fibres have the least packing density.

The process of manufacturing high strength composites typically found in the aeronautical industry involves taking woven laminates from which profiles are cut to predefined shapes. The laminates are then directly applied to a mould surface or assembled into a preform and then placed into a mould. The laminates may be preimpregnated with a matrix resin and are then heat cured or contain only fibre and are infused with a matrix resin. The laminates typically contain fibres in two or three directions and are laid down to provide predetermined fibre orientations. Laminates of this type are referred to as bi-directional laminates and can have high tensile strength values, typically 300Mpa for glass fibre and 440Mpa for a carbon fibre laminate.

EP 1917401 discloses structures which achieve tensile strength values in the range 300 to 380MPa.

Composite structures made from uni-directional fibres have significantly higher tensile strength values than bi-directional fibres, typically 800Mpa for glass fibre and 1000Mpa for carbon fibre. Products made from uni-directional fibres have been limited to items such as golf club shafts, fishing rods and spokes supporting cryogenic units. To date the technology to build more complex structures where elements of the structure are required to pass through each other has not been available.

To build the type of structures that this technology can facilitate requires creating fibre performs of complex fibre architecture. It is the objective of the intention to provide a method of apparatus for automatically assembling uni-directional fibres into a preform of fibres than can be handled, placed into a mould or become part of a more complex preform.

According to a first aspect of the present invention, a fibre reinforced polymer structure comprises a plurality of first and second bundles of substantially unidirectional fibres;
a first bundle overlying a second bundle in angular relation to form a node;
wherein the fibre volume fraction (FVF) of each bundle remains approximately constant as it passes through the node.

The fibre volume fraction (FVF) may be defined as the volume of fibre as a proportion of the total composite volume or as a ratio of the cross sectional areas. FVF may be determined by chemical matrix digestion, photomicroscopy, or by calculation.

A composite in accordance with the present invention may have an FVF of about 40% to about 60%, preferably about 50% to about 60%.

In embodiments of the invention, the FVF values of the first and second bundles are approximately the same. In this case the FVF of the node may be approximately the same as the FVF of each bundle. This avoids unnecessary interlaminar shear problems.

Alternatively, the FVF of the first bundle may be different to the FVF of the second bundle, with the total FVF of the node being a mean or intermediate value of the components.

For the purposes of simplicity, the composite structure will be described with horizontally extending bundles arranged in a vertical stack. However, overlying bundles may extend vertically or may extend in a curved direction, for example if the structure is assembled on a roller or other cylindrical surface.

The FVF may change vertically across the node although the FVF of each bundle remains approximately constant. Preferably, the total FVF remains approximately constant across all bundles within a node.

By use of the terms substantially constant or approximately constant it is intended that the FVF may have a margin of variation of ± 10%, preferably ± 5%, more preferably ± 2%.

The angle between the first and second bundles is preferably 90°. Alternatively, an angle of 30°, 40°, 60° or other suitable angle may be employed.

The angle between adjacent bundles is preferably constant in the vertical direction from the top to the bottom of the node. However, second bundles may be overlaid at two or more different angles, for examples 30° and 60°, relative to the direction of the first bundles.

In order to maintain a constant FVF, the height of each bundle may decrease at the node with the dimension in the transverse direction or width increasing in inverse proportion. In a first embodiment in which two similar bundles are overlain at 90°, the height of each bundle may be reduced by 50% at the node with the width increasing by 100% in order to maintain a constant FVF. Preferably, a constant cross sectional area is maintained in each bundle.

The fibres of each bundle may be splayed or displaced laterally as the fibres approach the node. Each bundle of fibres may have a median, longitudinal axis, the displacement of each fibre being proportional to the distance from the axis. Fibres, particularly glass fibres, may be displaced at an angle of up to 30°, typically 20° without kinking or deformation.

The incremental angular displacement between adjacent fibres is small so that interlaminar shear forces are minimised. Preferably, the angular displacement is less than 5° typically 1° or less. Small incremental angular displacements reduce interlaminar shear forces so that a value approaching zero is attained.

The distance from the axis of the fibres of a first bundle may increase in a direction towards the node until a region of overlap (defined as the node), with fibres of a second bundle is reached. The region of overlap or node may be rectangular or square in plan view for perpendicular bundles with the fibres of each bundle extending in parallel spaced relation perpendicular to the fibres of an adjacent bundle. Where the bundles are the same size, the region of overlap may be square.

The presence of transverse fibres for non-perpendicular arrangements or perpendicular fibres for rectilinear arrangements strengthens the node by providing a restoring force reducing the tendency of the fibres in a bundle to move closer when under tension. Interlaminar strains are relieved and the FVF within the node remains constant.

In an alternative configuration, the lateral separation of fibres is proportional to the distance from the centre of a node, so that each bundle has a rounded configuration in plan view of the node.

Various types of fibre may be employed, including aramid, carbon fibre, S-glass and E-glass. The matrix polymer resin may be a thermoformable polymer, particularly a thermoplastic or thermosetting polymer or blend having sufficient melt flow to permit the polymer to be shaped at an elevated temperature below the temperature at which it degrades. The polymer may be selected from polyester, acrylic, polyurethane and hybrid resin combinations. Polyethers and polyetheretherketones, for example as sold under the registered trade mark VICTREX may be used. An additional advantage of the invention is that webs can be formed from more than one fibre type allowing specific properties and economic criteria to be achieved.

Fibres may be provided as tapes comprising a monolayer of fibres or a thickness of a small number of fibres, for example 1 to 5 or 1 to 10 fibres. These tapes may be laid alternately to provide a closely integrated nodal structure, for example in which each row of fibres is adjacent rows of fibres extending in a different direction.

Co-extruded fibres such as DYNEEMA (registered trade mark of DuPont) may be employed. Such fibres may be, thermally set in a moulding tool.

In a particularly preferred embodiment, the node further comprises an array of thermally fusible fibres located between first and second bundles. The fusible fibres may be arranged to bond the bundles, for example, by microbonding.

The fusible fibres may be laid as an array between the first and second bundles, for example as a skeleton, web, warp or weft during assembly of the node.

Alternatively, a bundle may incorporate a proportion of fusible fibres, for example located on an outer surface of the bundle and arranged to contact an adjacent bundle during assembly of the structure.

The fusible fibres may be composed entirely of a fusible material having a melting temperature in the range 60°C to 160°C. Various polymers or blends such as polyester, copolyester or polyamide may be used. Alternatively, combination yarns may be used, comprising a high tenacity carrier thread coated with a fusible coating such as low melting point polyamide. Suitable fibres are manufactured by EMS-Chemie AG under the registered trade mark GRILON.

Functional devices may be incorporated into one or more of the bundles. For example, sensors or identity devices may be included to allow remote checking of the security or location of the structure, for example of a cover for an access chamber.

The shape of the node may be very precise, being determined by the need to maintain the fibre volume fraction of the fibres in the webs as they pass over each other in the node and accommodate the changing width of the webs as they approach the node. If the webs are of different thickness the node shape may be changed accordingly. In the event that webs approach each other at an angle of less than 90° the node shape is modified so that the the fibre volume fraction can be maintained at a constant value.

In preferred embodiments of the invention the fibre volume fraction of the web is maintained as it passes through the node. However individual design requirements may dictate that some webs do not have the same structural requirement and may employ a different fibre volume fraction compared to the web they pass through. In such a case, the node design may be adapted.

In a further embodiment of the invention in may be advantageous to incorporate larger webs in one direction than another and only where the smaller web passes through the larger will a node be required.

The use of a node through which the fibres of both webs pass serves to maintain the structural properties of the web as there is no change in fibre volume fraction. There may be a deviation from linearity of the fibres as they approach the junction within the node where the fibres from both webs pass over each other. Tensile testing of webs has shown no reduction in strength of the webs and that the strength of the nodes benefits from the interaction of fibres from each web.

According to a second aspect of the present invention, an engineering component comprises a fibre reinforced polymer structure in accordance with the first aspect of this invention.

According to a third aspect of the present invention, a fibre perform for an engineering component comprises a fibre reinforced structure in accordance with the first aspect of this invention, wherein the bundles are bonded together by, for example, microbonding.

The engineering component may comprise a structural member or load bearing panel, joist, beam or support. A load bearing work surface or cover may comprise the structure together with a suitable surface layer.

Engineering components in accordance with this invention find applications in manufacture of automobile chassis members and structural components, aerospace components, civil engineering components. Marine or other water resistant components may be provided.

The engineering component may comprise an array of first and second bundles, each arranged in parallel spaced relation, for example, to form a lattice.

The component may comprise a grating having apertures between adjacent bundles. Such gratings may be used for access chamber covers.

According to a fourth aspect of this invention, a structure in accordance with the first or second aspect of this invention may be manufactured by a method of forming a fibre reinforced polymer structure comprising the steps of:
providing a first bundle of fibres arranged in an array having a first fibre volume fraction (FVF);
forming a node region in the bundle wherein a transverse dimension of the first bundle is increased and a second perpendicular dimension of the bundle is decreased so that the first FVF is maintained at an approximately substantially constant value;
providing a second bundle of fibres extending in angular relation to the first bundle, arranged in an array having a second FVF;
forming a node region in the second bundle wherein a transverse dimension of the second bundle is increased and a perpendicular dimension of the second bundle is decreased so that the second FVF is maintained at an approximately constant value;
wherein the node region of the second bundle overlies the node region of the first bundle to form an assembly;
Infusing the assembly with a polymer resin, and curing the resin to form the structure.

Preferably, the step of overlying first and second bundles is repeated to form a structure having a multi-layered node.

The transverse dimension of each bundle is preferably increased from the transverse dimension or width of an internodal body of the bundle to a transverse nodal dimension or width, with an intermediate portion of increasing transverse dimension or width;
wherein the perpendicular dimension or height decreases from the perpendicular dimension or height of the intermodal bundle to a perpendicular nodal dimension or height with an intermediate portion of decreasing transitional perpendicular dimension or height.

Advantageous methods include the step of providing an array of thermally fusible fibres after the forming of a first node region and before the forming of a second node region.

The fusible fibres may be used to secure the bundles together by microbonding to form a perform.

The array of fusible fibres may be laid upon the first bundle as a web or as a warp or waft of parallel or unidirectional fibres. The fusible fibres may be formed as a skeleton having a configuration of the completed structure. In an alternative embodiment, a fusible sheet is applied between the first and second bundles.

The method may further comprise the step of applying heat and pressure to the assembly to form a bonded node preform.

The assembly may be passed through a heated nip, for example between heated rollers or between a heated roller and support surface. Alternatively, a heated press may be used.

Preferably cooling means are provided for rapidly solidifying the fusible fibres. Air jets or other gaseous cooling means may be employed. Alternatively, the structure may be passed between cooled rollers. In an embodiment in which the assembly comprises an array of nodes, for example a grating, cooling gas may be passed through apertures between the nodes to promote rapid solidification of the composite structure.

According to a fifth aspect of the present invention, a structure in accordance with the first, second or third aspects of this invention may be manufactured using fibre reinforced polymer structure manufacturing apparatus comprising:
a first feeder for providing a first bundle of fibres in a first direction;
a second feeder for providing a second bundle of fibres in a second direction;
wherein the first and second directions are disposed in angular relation;
and arranged so that the first and second bundles are overlaid in a node region;
the apparatus further comprising first and second dies, each having a variable lateral and perpendicular dimension, arranged so that the first and second bundles pass through a respective die at or adjacent the node region to control the lateral and perpendicular dimensions of the bundle;
wherein the node regions are superimposed to form an uncured assembly; and heating means arranged to provide heat and pressure to bond the assembly to form a fibre reinforced structure.

The structure may comprise a preform for an engineering component.

The die may advantageously comprise a channel together with means for adjusting a lateral and perpendicular dimension of the channel in the node region.

In a particularly preferred embodiment, the die comprises a rotatable cam preferably a cylindrical rotatable cam, having a circumferential channel with a variable lateral and perpendicular dimension. Conveniently the channel has variable width and depth.

A stepper motor or other reversibly controllable drive means may be arranged to rotate the cam in both a forward and reverse direction with respect to the direction of fibre feed so that a channel with variable dimensions is presented to the bundle as it reaches the node region.

In the preferred method, each die may be rotated either with or against the direction of travel of the bundle to alter the dimensions of the channel through which the bundle passes the die being returned to a starting point after each node has been formed and laid upon the preceding bundle. The vertical dimension or depth of the channel may be selected so that a bundle is urged into engagement with the underlying bundle.

Alternatively, a die having an adjustable orifice may be employed.

Apparatus for manufacture of grating or lattice structures may have two or more arrays of feeders disposed in angular relation and arranged to lay bundles successively to build up a multi-layer node structure.

The invention may further comprise a fusible fibre feeder arranged to lay an array of fusible fibres upon each bundle of first and second fibres in the node region.

The manufacturing process commences with laying dry fibres in alternate layers to create the webs. As the fibres enter the node they are spread into their appropriate shape necessary to pass through each node. The shape is maintained by either micro bonding or stitching the fibres together and in this way a preform of fibres is constructed. The preform is then placed in either a mould or may be assembled into a more complex preform which is then assembled into a mould. The mould is closed and sealed and then infused with catalysed resin. On completion of the curing stage the mould is opened and the component is removed. At this point the component will only require removal of flash and if required the addition of ancillary components.

The invention provides a construction method that allows webs of composite material to pass though each other by the creation of a node, within which bundles of structural fibres that form the webs and typically comprise unidirectional fibres, are permitted to change their cross sectional shape so that in both webs their cross sectional area and therefore their fibre volume fraction remains constant as each web passes through the node. In this manner the fibre volume fraction can be maintained at its desired value.

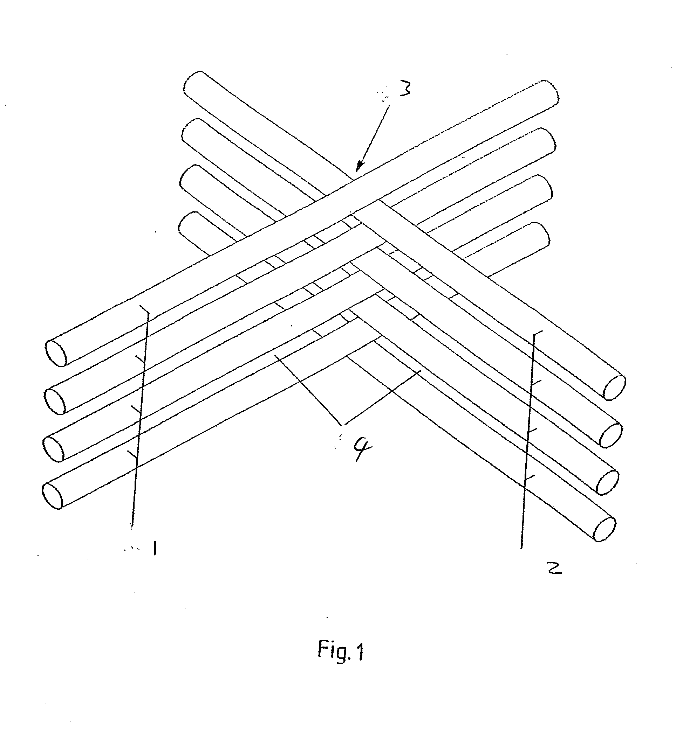

The invention is further described, by means of example but not in any limitative sense, with reference to the accompanying drawings, of which:-
Figure 1 shows a prior art arrangement for laying bundles of fibre (1,2) alternately so that each bundle sits on top of another at the intersection of a web (3). There is a resin rich space (4) between the fibre bundles.

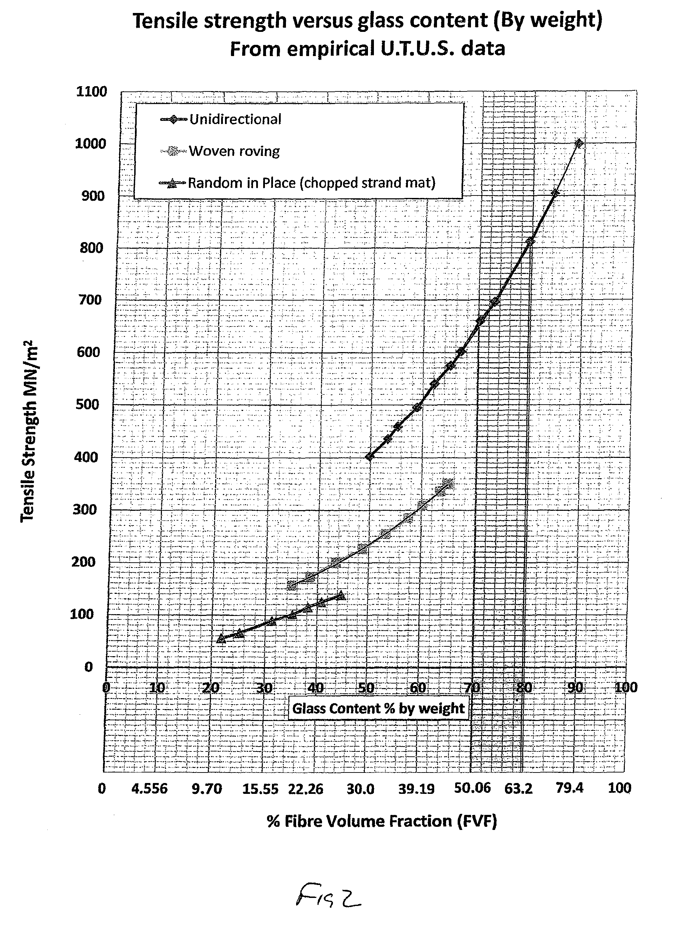

Fig 2 shows tensile strength values for glass fibre reinforcement within a polyester matrix resin. Significantly higher tensile strength values can be obtained with hybrid resin systems. Alternative reinforcing fibres such as carbon offer higher strength values in addition to higher values of modulus. The raw material cost of glass fibre that may be used is typically £1.10 per kg and a 50% fibre volume fraction structure may have a density of 1.8 kg/litre. Tensile strength is shown on the vertical axis in MN/m² and the glass content on the horizontal axis is shown both in glass content as % by weight and also as shown in % fibre volume fraction (FVF). Plot 1 shows the tensile strength versus glass content for random glass fibres such as chopped strand mat. Plot 3 shows tensile strength against glass content for woven roving glass fibre and plot 2 is the tensile strength versus glass content which is possible for unidirectional glass fibre as manufactured in accordance with this invention.

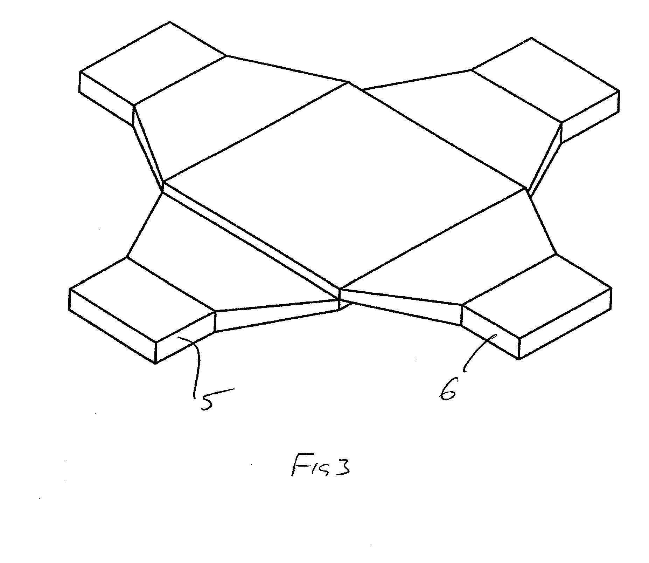

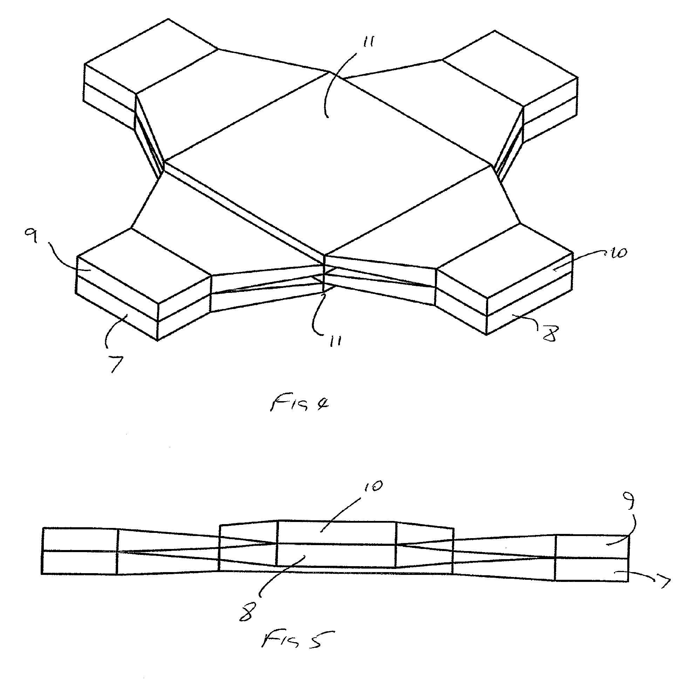

Figures 3 to 6 show two embodiments of the composite material structure of the invention. In each embodiment of the invention the composite structures comprise a plurality of layers of fibres. In the first embodiment the composite structure comprises two layers of fibres (5,6); wherein the first layer (5) of fibres extends in a 0° direction and a second layer (6) of fibres extend in a direction perpendicular to the first layer (5) of fibres. For simplicity of illustration, the layers of fibres are shown in rectilinear format. It is of course understood that the layers of fibres can be of any shape including cylindrical. The second embodiment is a composite structure (6) having four layers of fibres (7,8,9,10) wherein the first layer (7) and third layer (9) of fibres extends in a 0° direction and a second layer (8) and fourth layer (10) of fibres extend in a direction perpendicular to the first and third layers.

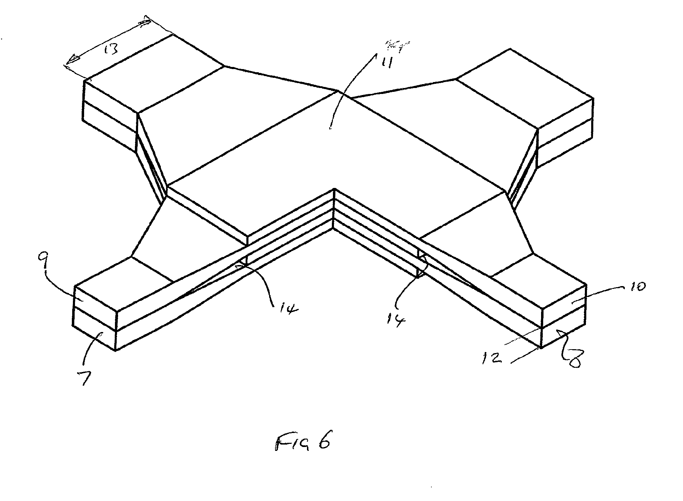

In each of the embodiments, the layers of fibres of the composite structure extending in the 0° direction overlap the layers of fibres extending 90° at a node point (11). In each of the embodiments the shape of the layers of fibres (7,8,9,10) is altered at the node point (11) to enable the layers to overlap each other without varying the fibre volume fraction. In Figure 6, the shape of layers of fibres is described in relation to the second and fourth layers of fibres (8,10). This description is applicable to all layers of fibres. The second and fourth layers of fibre (8,10) each have a specific height 12 and width 13 in the composite structure. As the layer of fibres (8,12) extends into a node point (11), the layer of fibres (8,12) gradually flattens out wherein the height (12) of the layer of fibres is decreased and the width (13) is increased relative to each other so that at the node point (11) although the shape of the layer of fibres is different the volume of space occupied by the layer of fibres remains the same. In this particular embodiment the effective height (12) of the layer of fibres (8) has halved, whilst the effective width (13) has doubled. In this way the cross sectional area occupied by the fibres remains constant as does the fibre volume fraction of the composite structure. Where the layers of fibres overlap at the node point (11) they are equivalent to the sum of the fibre volume fraction of each of the layers of fibres (7,8,9,10). The layers of fibres (7,8,9,10) progressively revert to their original shape as they extend beyond the node (11).

As the layers of fibre (7,8,9,10) progressively change shape as they approach the node (11) small resin rich areas (14) develop within the structure. In order to keep the size of these resin rich areas to a minimum, the thickness (12) of each fibre layer (7,8,9,10) is kept small, typically 0.5mm, and hence at the node (11) the height of the resin rich area (14) may be 0.25mm. It has been found that the fibre volume fraction of each layer remains constant as they approach the node and their shape changes.

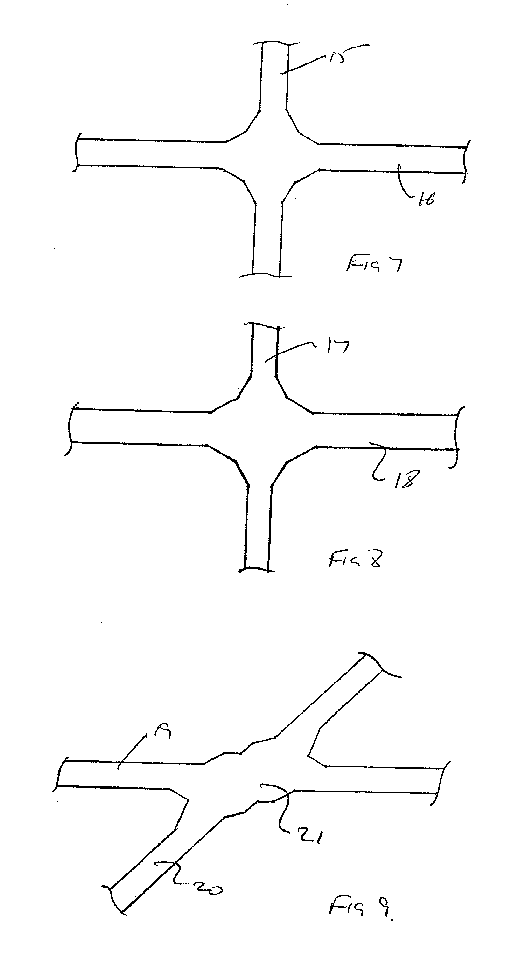

In Figure 7, it shows a typical node where two webs (15,16) pass through each other at right angles. A further typical node shown in Figure 8 has two webs (17,18) of different thickness which pass through each other at right angles. A further example of a node is shown in Figure 9 in which the two webs (19,20) are at an angle of 45°. The shape of the node (21) is modified to accommodate the fibres as they pass through the node.

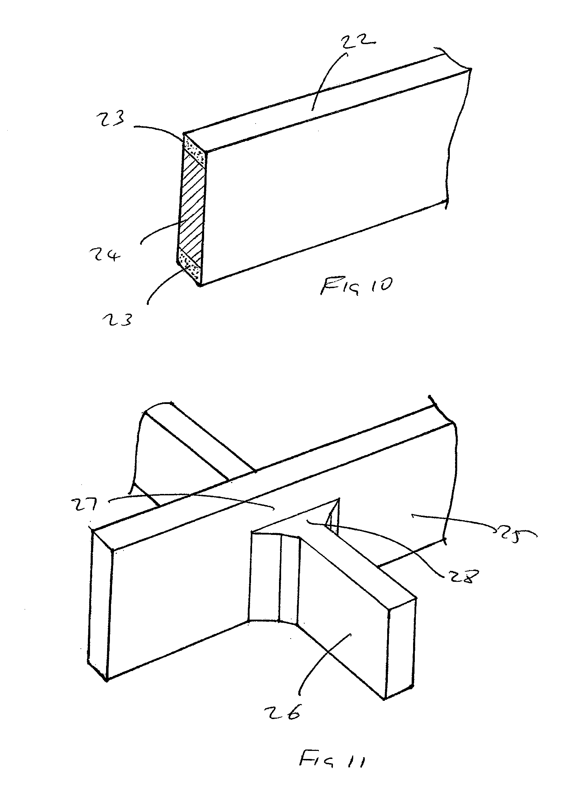

Figure 10 is an isometric end view of a web (22) in which layers of both carbon fibres (23) and glass fibres (24) are used. This construction results in a useful combination as the carbon fibres (23) may be up to twenty five times more expensive than the glass fibres (24). Placing the carbon fibres (23) at the extreme edges of the web (24) optimises the increased performance provided by carbon fibre. Such fibre blending can be accommodated very effectively using the invention.

The structure shown in Figure 11 has webs (25,26) of different sizes. This configuration is typical of rectangular structures where the bending movement is greater in one direction. In the case of the web (25), the part (27) which passes over the top (28) of the web (26) has the additional advantage of being able to consist totally of unidirectional fibres which are straight and therefore provide maximum structural performance where it is most required.

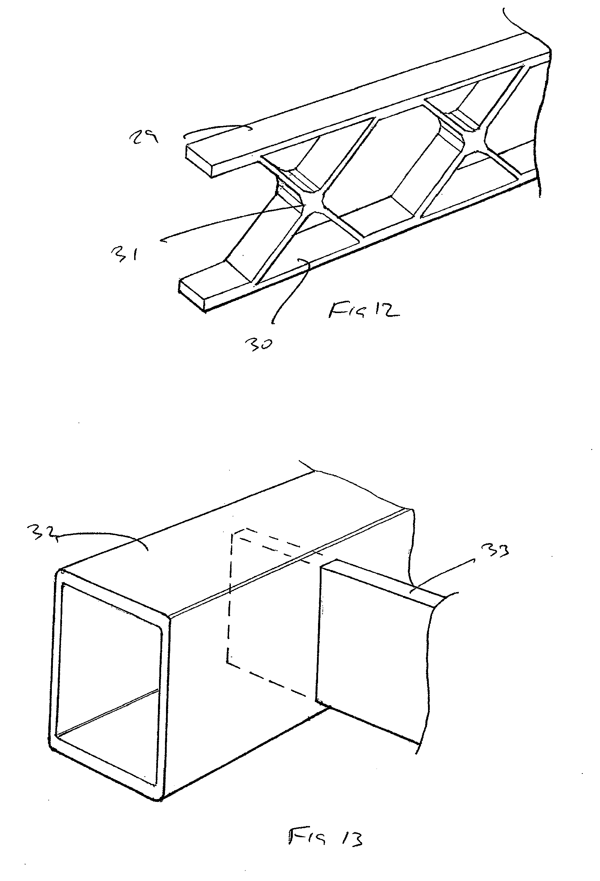

In Figure 12, the structure comprises two elongate parallel members (29,30) which are connected by right angled nodes (31). This structure is typically used as a structural beam, for example, as part of a structure in an aircraft such as ribs and stringers or a part of a floor or roof structure in a building.

The structure shown in Figure 13, shows a web (33) manufactured in accordance with the invention integrated into a box beam (32) which is constructed in accordance with the technology disclosed in WO 2007/020618, the disclosure of which is incorporated into this specification by reference for all purposes. This illustrates how that technology may be used to complement the present invention. This type of combined structure may be used for the chassis elements of vehicles and in manhole covers where the outer edge of the cover is required to accommodate a water seal.

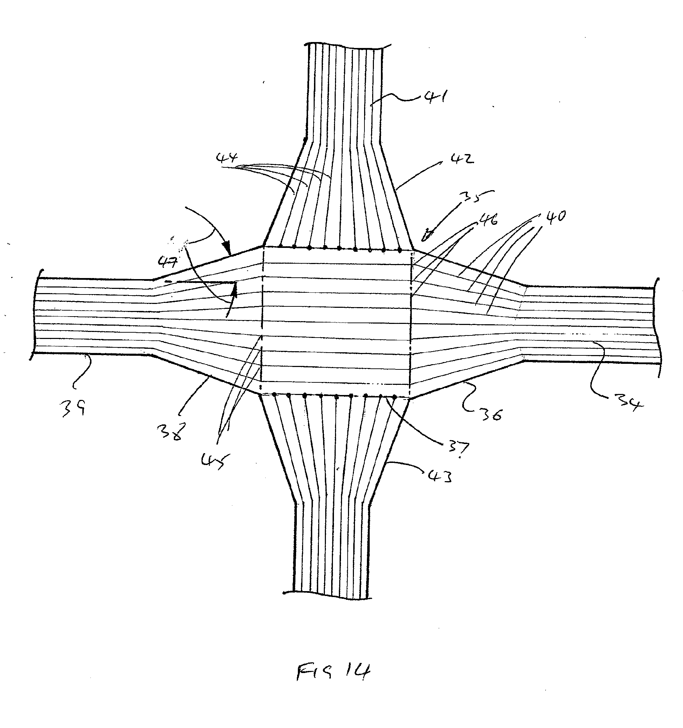

Figure 14 shows a plan view of a perpendicular node. A bundle comprising a single layer of parallel fibres of rovings (34) approaching a node (35). As the node (35) is approached, the transverse dimension of the bundle increases from a transverse dimension of the intermodal bundle (34) through an intermediate portion (36) of increasing transverse dimension, to a transverse nodal dimension as shown in the nodal region (37). The fibres extend in parallel across the nodal region (37) to a second intermediate region (38) and return to an intermodal transverse dimension at region (39). In addition to fibres of the bundle (34), a proportion of fusible fibres (40) is distributed on the surface of the bundle (34).

A second bundle (41) overlies the first bundle (34). The second bundle (41) has intermediate regions (42,43) and a nodal region (35). In the nodal region the second bundle of fibres extend in parallel, perpendicular to the first bundle of fibres, to form a square overlapping node. The fusible fibres (40) are fusibly engaged and secure with the fusible fibres (44) of the second bundle in the nodal region, for example, at (45,46). The layers of fibres may be further secured when the preform is moulded into the finished engineering component or other product. The fibres of one bundle therefore provide perpendicular support to the fibres of adjacent bundles, relieving forces which may urge the fibres to move towards each other when the structure is under tension.

In the illustrated embodiment, the first and second bundles have the same dimensions so that the node (35) is square in plan view. The angle (47) between the parallel intermodal fibres (35) and the fibres in the intermediate region (38) may be 20°-30°. This angle is preferably maintained at a minimum value to reduce interlaminar strains. However, nodal bonding (45)of adjacent fibres allows use of relatively large angles (47).

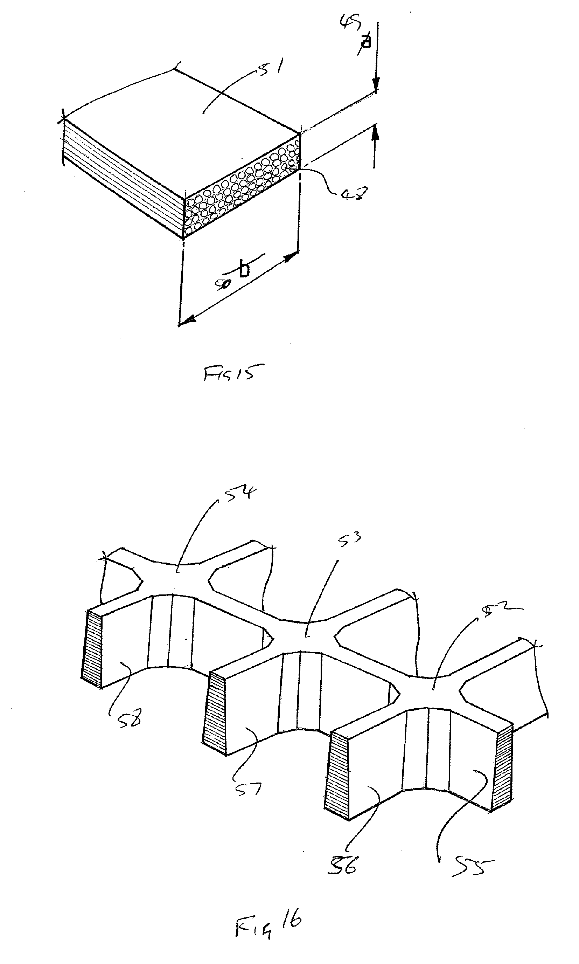

Figure 15 shows a bundle comprising a layer (51) of fibres. This layer consists of a number of direct rovings (48). The Tex of the direct rovings and the resultant number of direct rovings (48) is determined by the cross-sectional dimensions (49) and (50) of layer (51) and by the number required to achieve the change in value of the dimensions (49,50) as the webs 1 and 2 pass through a node. In the specific case that the fibre volume fraction of webs 1 and 2 is 50%, then as each web passes through the node dimension (49) will become (0.5 x 49 and dimension 50 will become 2 x 50"). Although the dimensions change, the cross-sectional area and hence the fibre volume fraction of the fibre layer (51) remains constant and the fibres extend continuously.

The apparatus of this invention may permit a number of bundles or layers of fibres to be assembled with the transverse and perpendicular dimensions changed at each node in order to achieve a desired configuration. As each layer of fibres is laid down, it may be microbonded to retain the shape relative to the previously laid down layers in order to form a complete fibre preform.

Figure 16 is an isometric view of a structure in which three nodes (52,53,54) are formed by intersection of a first bundle (55) with three second bundles (56,57,58) to form part of a grating.

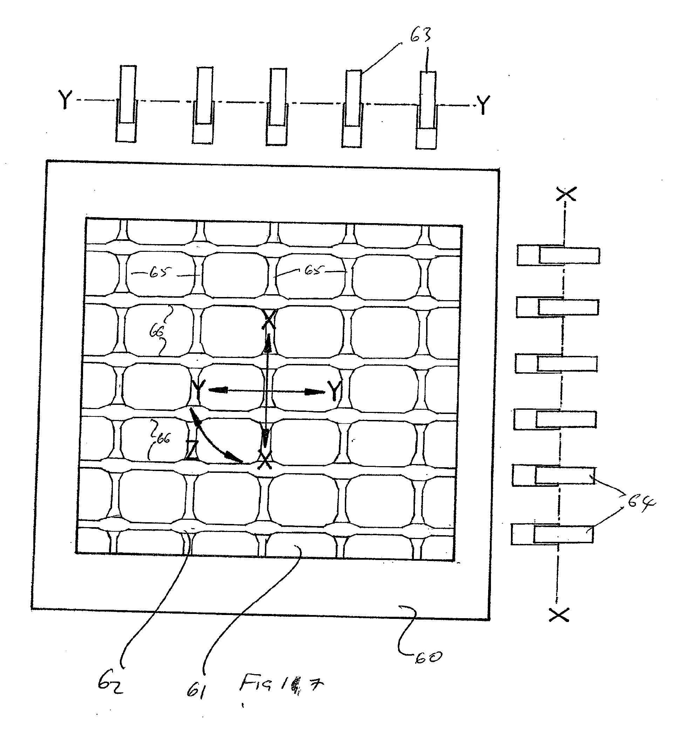

Figure 17 is a schematic view of apparatus in accordance with this invention. A platen (60) is mounted on a support to provide linear motion in the X, Y and Z directions and rotation in the Z axis, if necessary. A tray (61) is located on the platen (60). A preform (62) is assembled on the tray (61). The preform (62) may be removed from the tray (61) and stored prior to completion of the moulding process, as required.

Two arrays of fibre bundle laying heads (63,64) are located along edges of the platen in the X and Y directions. The fibre bundles may be delivered from the heads in the form of tapes. The bundle laying process is carried out by positioning and raising the platen (60) under the row of X direction heads (64). The platen (60) is moved an appropriate distance in the Y direction to lay a series of parallel bundles (66) on the tray (61) to produce the Y axis webs of the preform. The bundles are then cut by cutting apparatus (not shown). The platen (60) is then lowered in the Z direction and a tray is positioned under the Y heads. The bundle laying process is then carried out in a similar manner to produce the X axis webs of the preform (65). The process may be repeated as many times as necessary to build up the layers of preform to a suitable thickness and configuration.

In an alternative embodiment, a single array of tape heads is employed with the platen being rotated through 90° between alternate bundle laying stages.

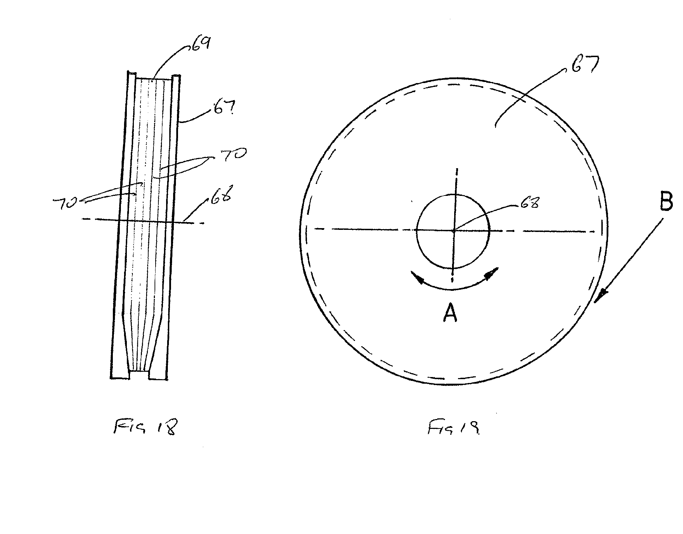

In Figures 18 and 19, a bundle or tape laying head is illustrated. A guide wheel (67) is mounted on a horizontal axis (68) and may be rotated in either direction ("A"). The circumferential face of the guidewheel (67) is provided with a main channel (69). The channel (69) has variable width and depth around the circumference of the wheel. The inner axially extending surface of the channel has a series of minor grooves or ridges (70). The axial spacing of the grooves or ridges varies in proportion to the width of the channel (69). The grooves or ridges serve to assist in guiding the structural fibres as the transverse dimension changes at the intermediate portions of the node following rotation of the wheel.

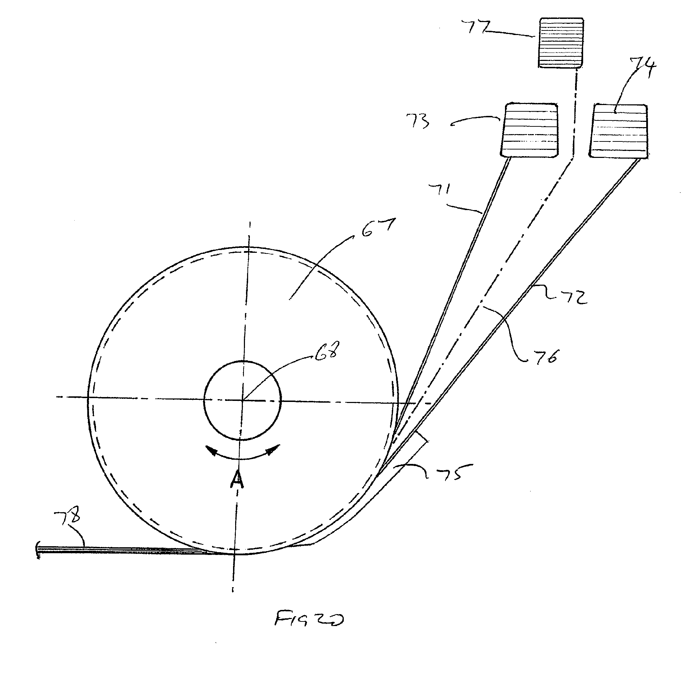

In Figure 20 the feeding of fibres to the guidewheel (67) is shown. Structural fibres (71,72) are brought from the creels (73,74) of the feeder and are directed into channel (69) of guidewheel (67) by a guideplate (75). A skeleton of fusible fibres (76) is supplied from a feeder creel (77).

The preform assembly (78) passes downstream from the guidewheel (67) (to the left as shown in Figure 20).

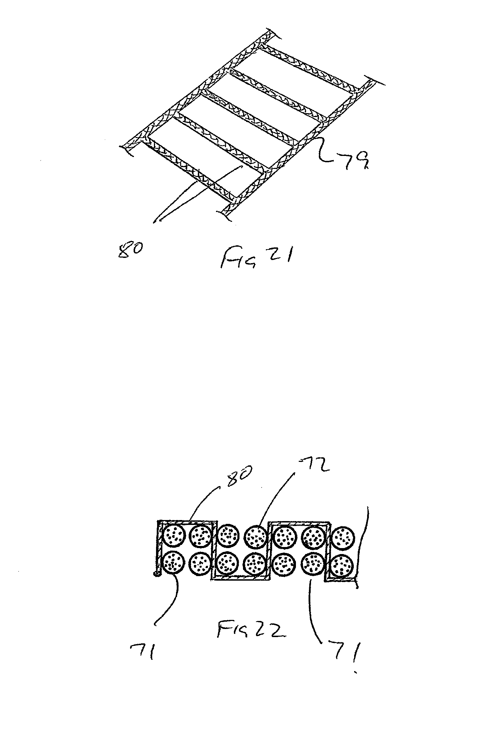

The structure of the skeleton (17) of fusible fibres is shown in Figure 21. Parallel longitudinally extending portions (79) are joined by spaced apart transverse members (80) to form an endless ladder configuration which is laid between alternate bundles of fibres (71,72) as shown in Figure 22. The structural fibres (71,72) and fusible fibre skeleton (79,80) are arranged so that the transverse fusible fibres (80) travel across the bundle as it is laid down so the skeleton is located on both sides of the bundle as shown in Figure 22.

When the skeleton has been heat treated the structural fibres of bundle (78) are held in the correct position. The consecutive layers of bundles of the assembly may be bonded together to form a semi-rigid preform.

The rotation of the guidewheel (67) is synchronised to the linear movement of platen (60) and tray (61). This permits the fibre architecture to be configured in a precisely controlled predetermined manner to form a microbonded preform.

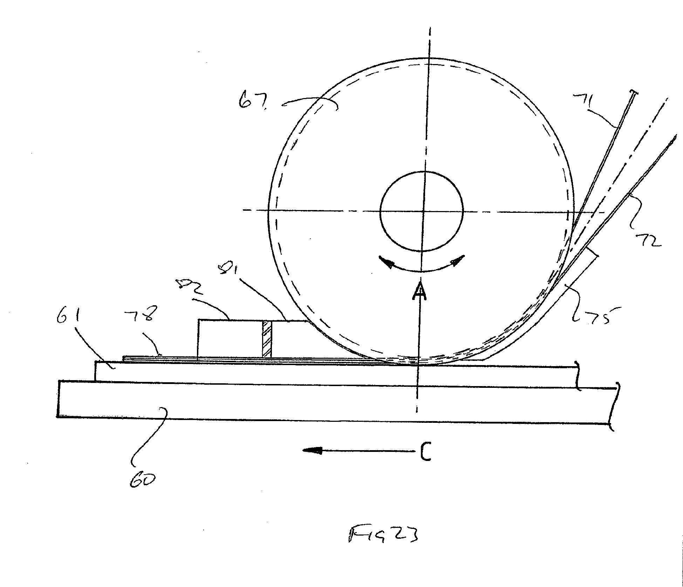

Figure 23 shows the bundle laying head in further detail and a method of laying the tapes of fibres (71,72) to form a bundle (78) having one or more nodes. The structural fibres (71,72) are restrained in the channel (69) of the guidewheel (67) at the point where they reach the surface of tray (61 or the upper surface of a previously laid bundle (not illustrated). The bundle (78) then passes under a heated shoe (81). The shoe has a surface facing downwardly towards the tray (61) and arranged to engage the upper surface of bundle (78. The shoe (81) applies light pressure to hold the bundle (78) in position and also provides heat to activate the fusible fibres of skeleton (79,80). When the fibres and skeleton are located in the channel (69) in the guidewheel (67), the transverse and perpendicular dimensions of the bundle are fixed and correspond to the dimensions of the channel at the particular radial orientation of the guidewheel (67).

As the structural fibres of bundle (78) continue to be laid down as a result of the linear movement of the platen (in the direction of arrow C in Figure 23) the heated bundle, including the fusible fibres, passes under a cold shoe (82). The cold shoe (82) cools the bundle and solidifies the fusible fibres of skeleton (79,80). The hot shoe (81) is separated from cold shoe (82) by a layer of insulating material (83).

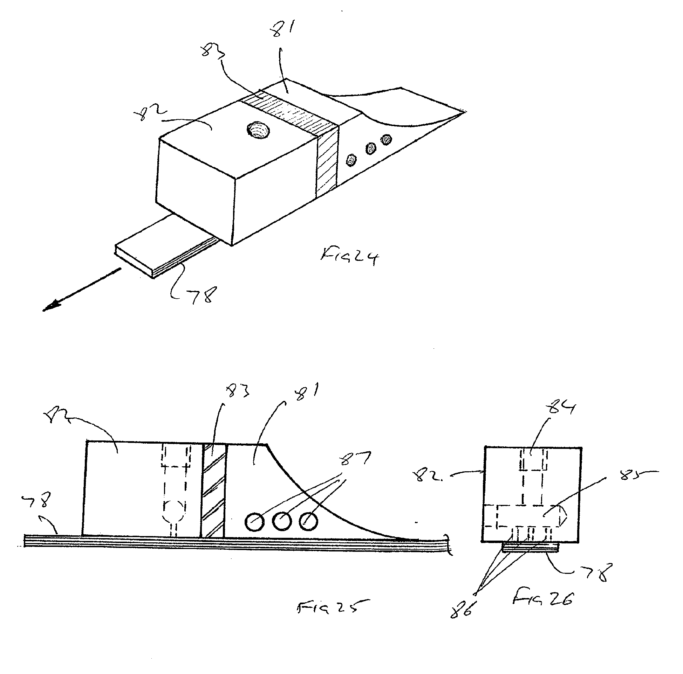

In Figures 24, 25 and 26 the hot shoe (81) and cold shoe (82) are shown in greater detail. Cold shoe (82) has an inlet (84) for compressed air which is fed through a transverse bore (85) to an array of outlet holes (86) with openings in the lower surface. The openings contact the bundle of fibres (78). Compressed air penetrates the bundle (78), rapidly removing the heat provided by the hot shoe (81), to cause solidification of the fusible fibres and thereby forming a rigid skeleton holding the fibres of the bundle in the dimensions determined by the channel (69) of the guidewheel (67).

Hot shoe (81) includes heater elements (87) to maintain a controlled elevated temperature. Alternatively or in addition, an array of holes may be provided to permit circulation of heated air through the bundle (78 in order to provide a more rapid and controllably responsive force of heat.

When an appropriate length of bundle (78 has been laid, it is cut to length. The process is then repeated for the X and Y axes as necessary to build up a desired bundle of layers microbonded together and laid out in each direction.

The X, Y and Z motion of the platen (60 is provided by stepping motors (not shown). By this means, the discreet location of the platen (60) in all three axes is known and may be controlled by a microprocessor control unit during the manufacturing process. The angular orientation of the guidewheel (12) is also controlled by a stepping motor. Linking of the four motions by the control unit allows the cross-sectional dimensions of each bundle to be controlled at any particular location within the preform (79,80).

Specific programmes for the microprocessor and the number and location of the guidewheels may be changed to facilitate production of a wide variety of composite structures.

A typical gully grating made in accordance with the invention may provide a clear opening of 450 x 450 mm and be suitable to support a load of 400 KN as defined in European Standard E124:1994.

## Claims

1. A fibre reinforced polymer structure comprises a plurality of first and
second bundles of substantially unidirectional fibres;
a first bundle overlying a second bundle in angular relation to form a node;
wherein the fibre volume fraction (FVF) of each bundle remains approximately constant as it passes through the node.

2. A fibre reinforced polymer structure as claimed in claim 1, wherein the fibre volume fraction is from about 40% to about 60%, preferably is from about 50% to about 60%.

3. A fibre reinforced polymer structure as claimed in any preceding claim, wherein the FVF values of the first and second bundles are approximately the same.

4. A fibre reinforced polymer structure as claimed in any of claims 1 or 2, wherein the FVF of the first bundle is different to the FVF of the second bundle, with the total FVF of the node being a mean value of the components.

5. A fibre reinforced polymer structure as claimed in any preceding claim, wherein the total FVF remains approximately constant across all bundles within a node.

6. A fibre reinforced polymer structure as claimed in any preceding claim, wherein the angle between the first and second bundles is 90°.

7. A fibre reinforced polymer structure as claimed in any preceding claim, wherein the height of each bundle decreases at the node with the dimension in the transverse direction increasing in inverse proportion.

8. A fibre reinforced polymer structure, wherein incremental angular displacement between adjacent fibres is less than 2°.

9. A fibre reinforced polymer structure as claimed in any preceding claim, wherein the region of overlap between first and second bundles is rectangular or square in plan view with fibres from each bundle extending in parallel spaced relation perpendicular to fibres of an adjacent bundle.

10. A fibre reinforced polymer structure as claimed in any preceding claim, wherein the node further comprises an array of thermally fusible fibres located between first and second bundles.

11. A fibre reinforced polymer structure as claimed in claim 10, wherein the fusible fibres are composed entirely of fusible material having a melting temperature in the range of 60°C to 160°C.

12. A fibre reinforced polymer structure as claimed in any of claims 10 or 11, wherein the fusible fibres are composed of polyester, co-polyester, polyamide or co-polyamide polymer or mixtures thereof.

13. A fibre reinforced polymer structure as claimed in any preceding claim, wherein the fibres are composed of S-glass, E-glass, aramid, carbon, fibre, epoxy resin and mixtures thereof.

14. An engineering component comprising a fibre reinforced polymer structure as claimed in any previous claim.

15. A fibre preform for an engineering component comprising a fibre reinforced structure as claimed in any of claims 1 to 14, wherein the bundles are bonded together.
